Europäisches Patentamt

European Patent Office

Office européen des brevets

(19)

(11) Publication number: **0 418 392 A1**

## (12) EUROPEAN PATENT APPLICATION
### published in accordance with Art. 158(3) EPC

(21) Application number: 90901092.8

(22) Date of filing: 19.12.89

(86) International application number:
PCT/SU89/00326

(87) International publication number:
WO 90/06830 (28.06.90 90/15)

(51) Int. Cl.5: **B23K 9/14**

(30) Priority: 19.12.88 SU 4621726
20.12.88 SU 4622043
20.12.88 SU 4640351
12.01.89 SU 4635982
10.05.89 SU 4689162

(43) Date of publication of application:
27.03.91 Bulletin 91/13

(84) Designated Contracting States:
**DE FR GB IT SE**

(71) Applicant: **MOSKOVSKY ENERGETICHESKY INSTITUT**
ul. Krasnokazarmennaya 14
Moscow, 105835(SU)

(72) Inventor: **ZUEV, Igor Vasilievich**
ul. Novorogozhskaya, 9-45
Moscow, 109544(SU)
Inventor: **TROFIMOV, Alexandr Dmitrievich**
ul. Fruktovaya, 8-2-78
Moscow, 113556(SU)
Inventor: **ESTROVA, Elena Nikolaevna**
ul. Molostovykh, 16-4-57
Moscow, 115558(SU)

(74) Representative: **Godwin, Edgar James**
MARKS & CLERK 57-60 Lincoln's Inn Fields
London, WC2A 3LS(GB)

(54) **METHOD AND CONSUMABLE ELECTRODE FOR ELECTRIC ARC WELDING OF METAL PARTS.**

(57) The method of electric arc welding of metal parts comprises the steps of placing a consumable electrode (1) between welded surfaces (2) of at least two metal parts (3, 4, 7) with a gap (23) between lateral surfaces (5) of the consumable electrode (1) and the welded surfaces (2) of the metal parts (3, 4, 7) and a gap (24) between a lower end surface (25) of the consumable electrode (1) and a lower surface (26) of at least one of the metal parts (3, 4, 7). Selection is made of the consumable electrode (1) with the lateral surfaces (5) having their cross-sectional area and configuration similar to the cross-sectional area and configuration of at least one of the welded surfaces (2) of the metal parts (3, 4, 7). A welding arc is drawn in the gap (24) between the lower end surface (25) of the consumable electrode (1) and the lower surface (26) of at least one of the metal parts (3, 4, 7). A metal jumper is formed between the welded surfaces (2) of the metal parts (3, 4, 7) and a welded joint is completed.

The consumable electrode for carrying out the proposed method of electric arc welding of metal parts comprises metallic elements (11) arranged parallel to each other and with gaps (12) between lateral surfaces (13), each element being connected to a power source.

# A METHOD OF ELECTRIC ARC WELDING OF METAL PARTS AND A CONSUMABLE ELECTRODE THEREFOR

## Technical Field

The present invention relates to welding, more particularly, to methods of electric arc welding of metal parts and to consumable electrodes therefor.

## Background Art

There is widely known a method (cf., SU, A, 200063) wherein worn surfaces of metal parts are built up by fire-cracker welding. A consumable electrode and metal parts to be built up are placed in a substantially horizontal position. A metal strip is located on the consumable electrode over each worn section. The thickness of the metal strip corresponds to the depth to which a given metal part is worn. An elliptic-section tube filled with alloying powder is arranged on the metal strip. During the built-up welding operation, there occurs self-regulated transfer of an electric arc. The melting of the horizontal electrode, the metal strip and the tube containing alloying powder takes place simultaneously whereby all the worn surfaces are built up through the full depth of the worn portion. The foregoing method is intended for building up flat metal parts and cannot be used to build up intricately shaped metal parts. Moreover, a shilding medium is required for accomplishing the disclosed method, which is a limiting factor.

Another widely known electric arc welding method (cf., SU, A, 71360) involves the welding-in of rods and is based on the use of a "running" arc drawn between a metal part and a consumable electrode. A rod is welded into a massive plate. The consumable electrode is a tubular structure fitted over the welded end of the rod so that an air gap is provided therebetween. The welding area is covered with flux. After the initiation of a welding arc, it moves in helical manner around the rod. The consumable electrode is gradually melted, thereby forming a bead around the rod. Since the consumable electrode located over the surface of the given metal part is melted and molten metal is tranfferred to the joint, the interelectrode gap increases and arcing stability is impaired. The process ends after two or three circular movements of the welding arc around the rod. Thus, the known method is unsuitable for welding thick-walled metal parts, intricately shaped parts and long metal parts.

## Disclosure of the Invention

The object of the present invention is to create a method of electric arc welding of metal parts and a consumable electrode therefor, in which the arrangement of the consumable electrode relative to welded surfaces of metal parts and new design of the consumable electrode would make it possible to obtain long welds in welding thick-walled metal parts and large-diameter tubes.

There is provided a method of electric arc welding of metal parts, comprising the steps of placing a consumable electrode in the welding zone of metal parts connected together with the consumable electrode to a power source with gaps between the lateral and lower end surfaces of the consumable electrode and the welded surfaces of the metal parts, firing a welding arc in the gap between the lower end metal parts, forming a metal jumper between the welded surfaces of the metal parts and welding together the metal parts, in which, according to the invention, the consumable electrode is disposed between the welded surfaces of at least two metal parts with gaps between the lateral surfaces of the consumable electrode and the welded surfaces of the metal parts and a gap between the lower end surface of the consumable electrode and the lower surface of at least one metal part, and an insulating layer is placed in the gap between the lateral surfaces of the consumable electrode and the welded surfaces of the metal parts, the selected consumable elec trode having lateral surfaces whose cross-sectional area and configuration are essentially similar to the cross-sectional area and configuration of at least one of the welded surfaces of the metal parts.

It is of advantage that, in order to improve quality of welds, the metal parts and the consumable electrode should be installed so that the lower surface of at least one metal part is set at an angle of more than O° with a horizontal plane in the direction perpendicular to the welded surfaces of the metal parts, while tangential planes passing through any points on the lateral surfaces of the consumable electrode and the welded surfaces of the metal parts are disposed at an angle greater than O° relative to a horizontal plane.

It is also advantageous that, with a view to obtaining long welds, the metal parts and the consumable electrode should be positioned so that the lower end surface of at least one metal part should be arranged at an angle of 0 to 90° relative to a horizontal plane in the direction parallel to the welded surfaces of the metal parts.

There is also provided a consumable electrode for carrying out the proposed method of electric arc welding of metal parts, representing an extended structure, which, according to the invention, comprises metallic elements located parallel to each other with a gap between lateral surfaces thereof, each element being connected to a power source and having a cross-sectional area and configuration of its lateral surface similar to the cross-sectional area and configuration of the welded surfaces of the metal parts, insulating layers being suitably placed in the gaps between the lateral surfaces of the metallic elements.

It is preferable that, in order to improve quality of welds, the gaps between the lateral surfaces of the metallic elements should contain at least one reinforcing plate with gaps between the lateral surfaces of the metallic elements and the lateral surfaces of each reinforcing plate in which the insulating layers are disposed in a suitable manner.

It is also preferable that, in order to further improve the quality of welds, each of the metallic elements should be made up of layers disposed in parallel to each other and to the lateral surfaces of the consumable electrode and having a different thermal conductivity factor which decreases in the direction from the central part of the consumable electrode to the lateral surfaces of said consumable electrode.

Thanks to a proper relative position of the consumable electrode and the welded surfaces of the metal parts and novel configuration of the lateral surfaces of the consumable electrode, the proposed method of electric arc welding of metal parts makes it possible to obtain long welds in welding thick-walled metal parts and large-diameter tubes, to increase the efficiency of electric arc welding and to improve quality of welds. The use of the proposed consumable electrode for carrying out the method of electric arc welding of metal parts, according to the invention, further increases the quality of the obtained welds.

Brief Description of the Drawings

The invention will now be described further with reference to specific embodiments of the proposed method of electric arc welding of metal parts and a consumable electrode therefor, taken in conjunction with the accompanying drawings, wherein:

Fig. 1 is a front view of metal parts and a consumable electrode (isometric projection), according to the invention;

Fig. 2 is a front view of metal parts and another embodiment of the consumable electrode (isometric projection), according to the invention;

Fig. 3 is a front view of metal parts and a third embodiment of the consumable electrode (longitudinal section), according to the invention;

Fig. 4 is a bottom view of the same, according to the invention;

Fig. 5 is a front view of metal parts and a fourth embodiment of the consumable electrode (isometric projection), according to the invention;

Fig. 6 is a front view of metal parts and a fifth embodiment of the consumable electrode (isometric projection), according to the invention;

Fig. 7 is a side view of the consumable electrode and a weldpool, according to the invention;

Fig. 8 is a top view of metal parts and the consumable electrode in another position thereof relative to a horizontal plane during the welding operation, according to the invention; and

Fig. 9 is a section along IX-IX of Fig. 8 (side view), according to the invention.

Best Mode of Carrying Out the Invention

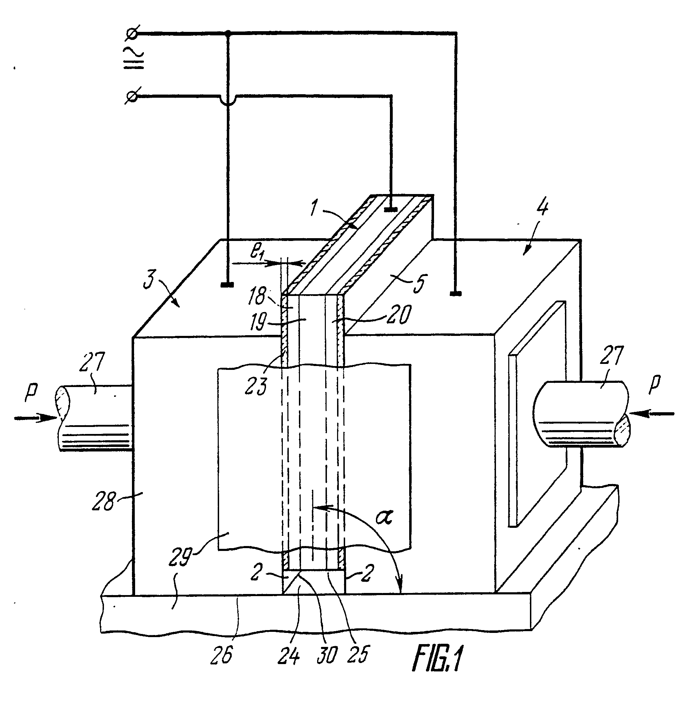

The proposed method of electric arc welding of metal parts is accomplished by the use of a consumable electrode 1 (Fig. 1), which is an extended structure installed between welded surfaces 2 of metal parts 3 and 4.

Before installation of the consumable electrode 1 and the metal parts 3 and 4, selection is made of the consumable electrode 1 whose lateral surfaces 5 have a cross-sectional area and configuration similar to the cross-sectional area and configuration of the welded surfaces 2 of the metal parts 3 and 4. Before that, the consumable electrode 1 is formed by any suitable prior art techniques using plastic deformation of metals (cold and hot extrusion, mechanical working of metals).

In the first embodiment of the invention, the consumable electrode 1 is a rectangular plate with flat lateral surfaces 5 whose cross-sectional area and configuration are essentially similar ti the cross-sectional area and configuration of the welded surfaces 2 of the flat metal parts 3 and 4.

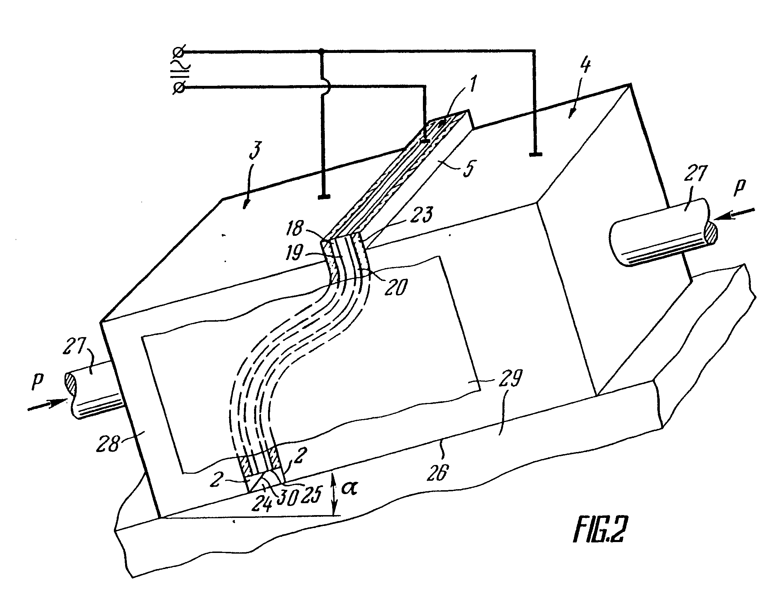

In the case of undulatory configuration of the welded surfaces 2 (Fig. 2) of the metal parts 3 and 4, the consumable electrode 1 is a rectangular plate with lateral surfaces 5 whose cross-sectional area and configuration are essentially similar to the cross-sectional area and undulatory configuration of the welded surfaces 2 of the metal parts 3 and 4.

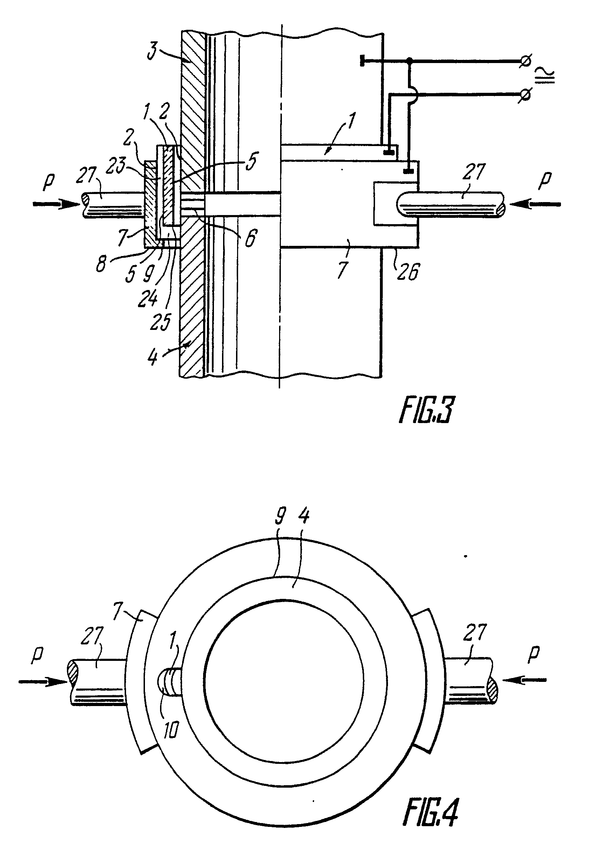

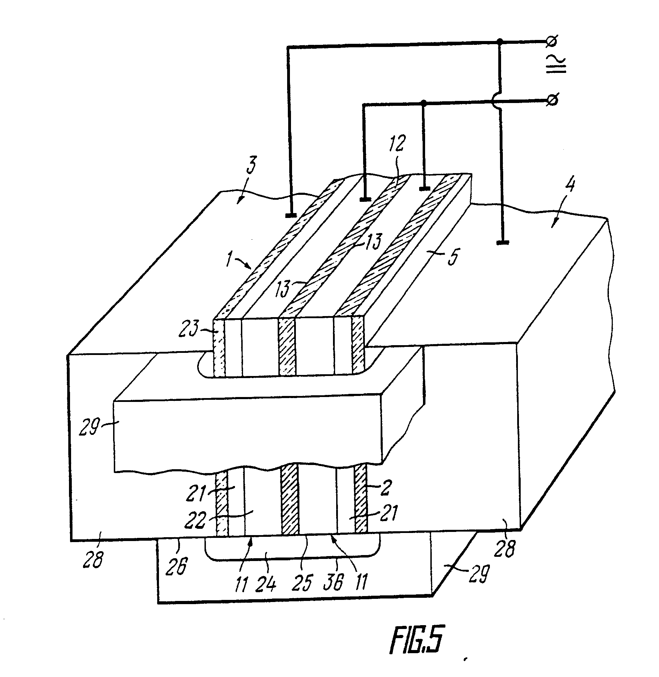

There is also possible electric arc welding of the metal parts 3 and 4 (Fig. 3) representing cylindrical pipes arranged vertically and joined along end surfaces thereof. At a joint 6 of the metal parts 3 and 4 there is placed an additional metal part 7 made as a cylindrical sleeve-like band encompassing the metal parts 3 and 4. A bottom 8 of the additional metal part 7 has a central hole 9 mounting the lower metal part 4 and a peripheral hole 10 (Fig. 4). In this case, the consumable electrode 1 (Fig. 3) is a cylindrical pipe whose diameter exceeds that of the metal pipes 3 and 4. The configuration of the consumable electrode 1 is similar to that of the welded surfaces 2 of the metal parts 3, 4 and the additional metal part 7. The cross-sectional area of the consumable electrode 1 is similar to the cross-sectional area of the welded surface 2 of the additional metal part 7.

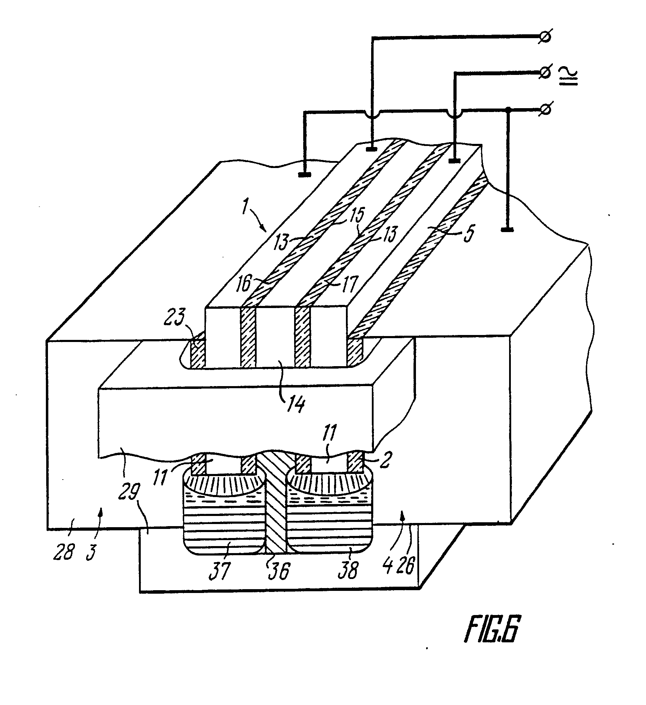

The quality of welds can be substantially improved by using a fourth embodiment of the consumable electrode 1 (Fig. 5) which is an extended structure with flat lateral surfaces 5. The consumable electrode 1 comprises two metallic elements 11. Each metallic element 11 is a rectangular plate connected to a power source. The matallic elements 11 are arranged parallel to each other and to the lateral surfaces 5 of the consumable electrode 1, facing the welded surfaces 2 of the metal parts 3 and 4 with a gap 12 between lateral surfaces 13 of the metallic elements 11, facing the central portion of the consumable electrode 1.

In each metallic element 11, the cross-sectional area and configuration of the lateral surfaces 5 and 13 are similar to the cross-sectional area and configuration of the welded surfaces 2 of the metal parts 3 and 4. Insulating layers are placed in the gap 12 between the lateral surfaces 13 of the metallic elements 11.

The quality of welds can be further improved by using a fifth preferred embodiment of the consumable electrode 1 (Fig. 6) comprising two metallic elements 11 connected to a power source. The metallic elements 11 are arranged parallel to each other and to the lateral surfaces 5 of the consumable electrode 1 with a gap between the lateral surfaces 13 of the metallic elements 11 in which a reinforcing plate 14 is disposed. Provided between the lateral surfaces 13 of the metallic elements 11 and lateral surfaces 14 of the reinforcing plate 14 are gaps 16 and 17 accommodating insulating layers.

The cross-sectional area of the reinforcing plate 14 is similar to the cross-sectional area of the metallic elements 11 of the consumable electrode 1.

The consumable electrode 1 may comprise n metallic elements arranged parallel to one another and to the lateral surfaces 5 of the consumable electrode 1.

Also, the consumable electrode 1 may include n metallic elements, gaps between lateral surfaces of each element accommodating (n - 1) reinforcing plates.

In order to further increase the quality of the obtained welds, use can be made of the consumable electrode 1 (Fig. 1) made up of layers 18, 19 and 20 arranged parallel to one another and to the lateral surfaces 5 of the consumable electrode 1, facing the welded surfaces 2 of the metal parts 3 and 4. The layers 18, 19 and 20 have a different thermal conductivity factor decreasing in the direction from the central portion of the consumable electrode 1 to its lateral surfaces 5. The central layer 19 is made of metal similar to that of the metal parts 3 and 4, say of carbon steel. The peripheral layers 18 and 20 are made of metal having a small thermal conductivity factor, for example, austenitic steel or a nickel-base alloy. The thermal conductivity factor of the central layer 19 of the consumable electrode 1 is $\propto$ = 0.1 cal/cm at t = 500 - 800 $^\circ$C while the thermal conductivity factor of the peripheral layers 18 and 20 of the consumable electrode 1 is $\propto$ = 0.04 - 0.05 cal/cm at t = 500 - 800 $^\circ$C.

When the metal parts 3 and 4 to be welded are made of low-carbon pearlitic steel, use is made of the consumable layer 1 in which the central layer 19 having a thickness of 4 mm is also made of low-carbon pearlitic steel whereas its peripheral layers 18 and 20 having a thickness of 0.5 mm are made of austenitic steel. The thermal conductivity factor of the central layer 19 of the consumable electrode 1 is $\propto$ = 0.31 cal/cm at t = 500 - 800 $^\circ$C. The thermal conductivity factor of the peripheral layers 18 and 19 of the consumable electrode 1 is $\propto$ = 0.16 cal/cm.

With the consumable electrode 1 (Fig. 5) made up of two metallic elements 11, each metallic element 11 consists of layers 21 and 22 arranged parallel to each other and to the lateral surfaces 5 of the consumable electrode 1 and having a different thermal conductivity factor which decreases in the direction from the central portion of the consumable electrode 1 to its lateral surfaces 5. For example, the layers 21 of the metallic elements 11, facing the central portion of the consumable electrode 1 can be made of low-carbon pearlitic steel with the thermal conductivity factor $\propto$ = 0.31 cal/cm while the layers 22 of the metallic elements 11, facing the lateral surface 5 of the consumable electrode 1 can be made of austenitic steel with the thermal conductivity factor $\propto$ = 0.16 cal/cm at t = 500 - 800 $^\circ$C.

The methos of electric arc welding of metal parts forming the subject of the present invention is accomplished as follows.

An insulating coat is applied in a uniform manner to the lateral surfaces 5 (Figs 1, 2) of the consumable electrode 1 or to the welded surfaces 2 of the metal parts 3 and 4 which is followed by the installation procedure. The consumable electrode 1 is positioned between the welded surfaces 2 of the metal parts 3 and 4 with a gap 23 between the lateral surfaces 5 of the consumable electrode 1 and the welded surfaces 2 of the metal parts 3, 4 and a gap 24 between a lower end surface 25 of the consumable electrode 1 and a lower surface 26 of the metal parts 3 and 4. Attached to the metal parts 3 and 4 are cramps 27 of a clamping arrangement, for example, vice (not shown in the drawing). Then, a force P is applied to the assembled structure to provide for tight joining of the welded surfaces 2 of the metal parts 3, 4 and the lateral surfaces 5 of the consumable electrode 1 without deforming the insulating layer.

The value $l_1$ of the gap 23 between the lateral surfaces 5 of the consumable electrode 1 and the welded surfaces 2 of the metal parts 3, 4 is equal to the thickness of the insulating layer.

To hold molten metal in place during the welding operation, straps 29 made as flat plates are attached to the lower surface 26 and lateral surface 28 of the metal parts 3 and 4.

The consumable electrode 1 and the metal parts 3, 4 are installed so that the lower surface 26 of the metal parts 3 and 4 is found at an angle $\propto$ greater than $0°$ relative to a horizontal plane in the direction perpendicular to the welded surfaces 2 of the metal parts 3 and 4 to satisfy the condition in which tangential planes passing through any points on the lateral surface 5 of the consumable electrode 1 and the welded surfaces 2 of the metal parts 3 and 4 are disposed at an angle greater than $0°$ relative to a horizontal plane. In the illustrated embodiment, the angle $\propto$ between the lower surface 26 of the metal parts 3, 4 and the horizontal plane equals $90°$.

With intricately shaped welded surfaces 2 (Fig. 2) of the metal parts 3 and 4, the consumable electrode 1 and the metal parts 3, 4 are installed so that the lower surface 26 of the metal parts 3 and 4 is found at the angle $\propto$ greater than $0°$ relative to said horizontal plane.

The next step is to turn on the power source and connect to its opposite terminals the consumable electrode 1 (Figs 1, 2) and the metal parts 3, 4. Then, a welding arc is drawn in the gap 24 between the lower end surface 25 of the consumable electrode 1 and the lower surface 26 of the metal parts 3, 4 by short-circuiting the gaps 23 between the lateral surfaces 5 of the consumable electrode 1 and the welded surfaces 2 of the metal parts 3, 4 by means of a graphite rod or a high-frequency injection unit. Thereafter, the consumable electrode 1 and lower edges 30 of the metal parts 3, 4 are melted with molten metal being transferred from the consumable electrode 1 and the lower edges 30 of the metal parts 3, 4 to a weldpool 31 which is followed by crystallization of the metal and formation of a metal jumper between the welded surfaces 2 of the metal parts 3 and 4. Thus, a weld is made.

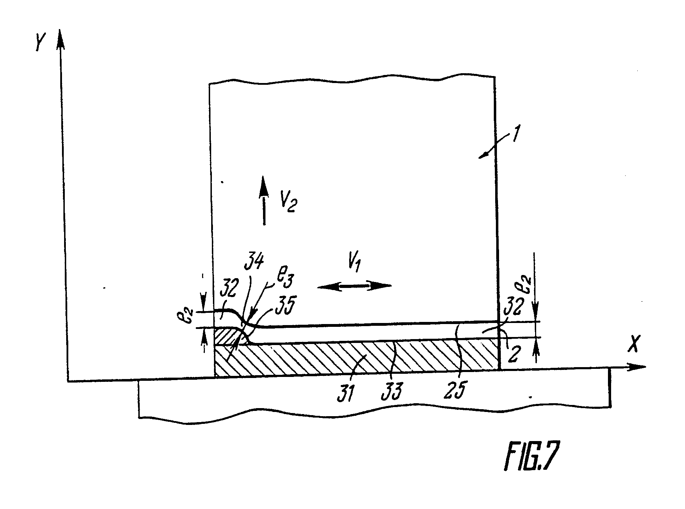

Fig. 7 shows the movement of a welding arc with the X-axis passing towards the lower end surface 25 of the consumable electrode 1 while the Y-axis extends through the full height of the consumable electrode 1, including the gap 24 between the lower end surface 25 of the consumable electrode 1 and the lower surface 26 of the metal parts 3, 4. As the consumable electrode 1 (Fig. 1) and the lower edges 30 of the metal parts 3, 4 are melted, the arc reciprocates spontaneously along the lower end surface 25 of the consumable electrode 1 for the thickness of the metal parts 3, 4 on the X-axis (Fig. 7) at a speed $V_1$. Said arc also performs translational motion from the bottom upwards for the height of the metal parts 3, 4 (Fig.1) towards the consumable electrode 1 on the Y-axis (Fig. 7) at a speed $V_2$.

Such a movement of the welding arc is attributable to a change in the value $l_2$ of a gap 32 between the lower end surface 25 of the consumable electrode 1 and a surface 33 of the crystallized metal of the weldpool 31 in the arc firing zone due to transfer of the molten metal from the consumable electrode 1 and the lower edges 30 (Fig. 1) of the metal parts 3, 4 into the weldpool 31 (Fig. 7). Owing to self-regulation, the welding arc moves towards a gap 34 between the lower end surface 25 of the consumable electrode 1 in the inflection zone of said surface 25 formed due to transfer of the molten metal into the weldpool 31 and a surface 35 of the molten metal in the weldpool 31. Said motion of the arc is caused by the fact that the value $l_3$ of the gap 34 is substantially smaller than the value $l2$ of the gap 32. The constant value $l_1$ of the gap 23 (Fig. 1) between the lateral surfaces 5 of the consumable electrode 1 and the welded surfaces 2 of the metal parts 3, 4 along the entire surface 2 provides for stable arcing throughout the metal parts 3 and 4. Gases formed in the arcing zone are discharged through the insulating layer of the consumable electrode 1 in the gap 23.

A quality welded joint between the metal parts 3 and 4 is ensured by placing the consumable electrode 1 and the metal parts 3, 4 at the angle $\propto$ greater than $0°$ relative to the horizontal plane so that tangential planes passing through any points on the lateral surface 5 of the consumable electrode 1 and the welded surfaces 2 of the metal parts 3, 4 are disposed at an angle greater than $0°$ relative to the horizontal plane.

If the welded surface 2 (Fig. 2) of the metal parts 3 and 4 has horizontal portions, the consumable electrode 1 is used to build up the welded surface 2 of the metal part 4 which is located under the consumable electrode 1. The section of the welded surface 2 of the metal part 3 located above the consumable electrode 1 is excluded from welding since all molten metal flows down on the welded surface 2 of the metal part 4 located under the consumable electrode 1 whereby an unwelded portion is formed.

In arc welding of the metal parts 3 and 4 (Fig. 3) representing cylindrical pipes, an insulating coat is uniformly applied to the external and internal lateral surfaces 5 of the cylindrical consumable electrode 1. The consumable electrode 1 is positioned in the gap between the welded external surfaces 2 of the upper and lower metal parts 3, 4 and the welded internal surfaces 2 of the additional metal part 7 with the gaps 23 between the lateral surfaces 5 of the consumable electrode 1, the welded surfaces 2 of the metal parts 3, 4 and the additional metal part 7 and the gap 24 between the lower end surface 25 of the consumable electrode 1 and the lower surface 26 of the additional metal part 7.

The external cylindrical surface of each of the cylindrical metal parts 3, 4 and the internal cylindrical surface of the additional metal part 7 representing a sleeve-like band are the welded surfaces 2 of the metal parts 3, 4 and 7. An insulating coat is applied to the external and internal lateral surfaces 5 of the consumable electrode 1. The consumable electrode 1 is positioned between the welded surfaces 2 of the metal parts 3, 4 and 7 with the gaps 23 between the lateral surfaces 5 of the consumable electrode 1 and the welded surfaces 2 of the metal parts 3, 4, 7 and the gap 24 between the lower end surface 25 of the consumable electrode 1 and the lower surface 26 of the additional metal part 7. The sleeve-like band and the consumable electrode 1 are arranged in a symmetrical manner relative to the joint 6 of the cylindrical metal parts 3 and 4. The assembled structure is held together by a clamping arrangement whose cramps 27 are attached to the external surface of the sleeve-like band. The value $l_1$ of the gaps 23 is equal to the thickness of the insulating layer of the consumable electrode 1. Next, a welding arc is drawn in the gap 24 through the hole 10 in the bottom 8 of the sleeve-like band by short-circuiting the gaps 23 by means of a high-frequency injection unit. In much the same manner as in the first embodiment of the invention, with the melting of the consumable electrode 1 and the metal of the welded surfaces 2 of the metal parts 3, 4 and 7, the welding arc performs rotary motion along the lower end surface 25 of the consumable electrode 1 round the outer periphery of the metal parts 3, 4 and translational motion for the height of the consumable electrode 1. The welding arc arso moves along the joint 6 of the metal parts 3 and 4 to a higher level for the height of the consumable electrode 1. The molten metal of the consumable electrode 1 is transferred into the lower portion of the gap 24 forming the weldpool 31 whose crystallization is followed by the formation of a monolythic weld between the metal parts 3, 4 and the additional metal part 7 representing a sleeve-like band at the joint 6 of the metal parts 3 and 4.

The sleeve-like band and the consumable electrode 1 may be located on the internal surface of the metal parts 3 and 4, for example, in welding large-diameter cylindrical metal parts 3 and 4.

The metal parts 3, 4, 7 and the consumable electrode 1 are positioned so that the lower end surface 26 of the additional metal part 7 is found at an angle greater than 0° with respect to the horizontal plane in the direction perpendicular to the welded surfaces 2 of the metal parts 3 and 4. Said angle equals 90° in the preferred embodiment of the invention.

The welding operation is performed in a similar manner with the consumable electrode 1 (Fig. 5) made up of two metallic elements 11 when an insulating layer is found in the gap 12 between their lateral surfaces 13.

To hold molten metal in place during the welding operation, the straps 29 made as a channel are secured to the lower surface 26 and the lateral surface 28 of the metal parts 3 and 4. The strap 29 secured to the lower surface 26 of the metal parts 3 and 4 acts as the addition al metal part 7 welded on said surface 26. A welding arc is fired in the gap 24 between the lower end surfaces 25, 26 of the consumable electrode 1 and the metal parts 3, 4 and the lower end surface of a slot 36 in the strap 29 secured to the lower surface 26 of the metal parts 3 and 4.

Welding arcs are drawn simultaneously between each metallic element 11 of the consumable electrode 1 and the nearby welded surface 2 of the metal parts 3 and 4, thereby forming the common weldpool 31. In the case of extinction of one of the welding arcs, for example, due to the short-circuited gap 34 (Fig. 7) between the lower end surface 25 of the consumable electrode 1 and the surface 35 of the molten metal of the weldpool 31, the other welding arc will be also extinguished. Inasmuch as the power source to which the consumable electrode 1 (Fig. 5) and the metal parts 3 and 4 are connected has a drooping vol-ampere characteristic, the metal jumper passes a current pulse with an amplitude multiple of the number of the metallic elements 11 of the consumable electrode 1. The metal jumper is melted and welding arcs are drawn between each metallic element 11 of the consumable electrode 1 and the nearby welded surface 2 of the metal parts 3 and 4. Such a feature substantially enhances arcing stability and saves power needed to perform a welding operation due to a reduced short-circuit period and subsequent automatic initiation of a welding arc. Furthermore, the quality of a weld is improved owing to uniform fusion of the welded surfaces 2 of the metal parts 3 and 4, an advantage attributable to a stable spacial position of the welding arc and the absence of its deflection to one of the welded surfaces 2 of the metal parts 3 and 4.

With the consumable electrode 1 (Fig. 6) made up of two metallic elements 11 having the reinforcing plate 14 therebetween, the common weldpool 31 is divided by the reinforcing plate 14 into two separate weldpools 37 and 38 which do not communicate with each other while the con sumable electrode 1 and the lower edges 30 of the metal parts 3 and 4 are melted. Each weldpool 37 and 38 has a small volume which makes it possible to concentrate the thermal energy in close proximity to the welded surfaces 2 of the metal parts 3, 4 and to increase the fusion depth of the metal parts 3, 4. As a result, the obtained welded joint has a close-grained structure. The lateral surfaces 15 of the reinforcing plate 14 are partially fused, thus forming a monolithic weld as the weldpool 31 is crystallized. Thus, the strength of the obtained weld increases in its central portion due to the chosen mechanical properties of the reinforcing plate 14.

With the consumable electrode 1 (Figs 1, 2) made up of the layers 18, 19, 20 having a different thermal conductivity factor, the arcing causes the melting of the central layer 19 of the consumable electrode 1 and its peripheral layers 18, 20. Drops of the molten metal are transferred to the weldpool 31, the metal of the layers 18 and 20 with a small thermal conductivity factor being disposed round the periphery of a weld and remaining due to slow motion along the welded surfaces 2 of the metal parts 3 and 4, a factor regulating heat removal from the welding zone to the welded surfaces 2 of the metal parts 3 and 4. Lesser heat removal round the periphery of a weld increases the crystallization time of the weldpool 31 and the fusion depth of the welded metal parts 3, 4 and improves the structure of the weld.

The electric arc welding process occurs essentially in the same manner with each metallic element 11 (Fig. 5) of the consumable electrode 1 made up of the layers 21 and 22 having a different thermal conductivity factor.

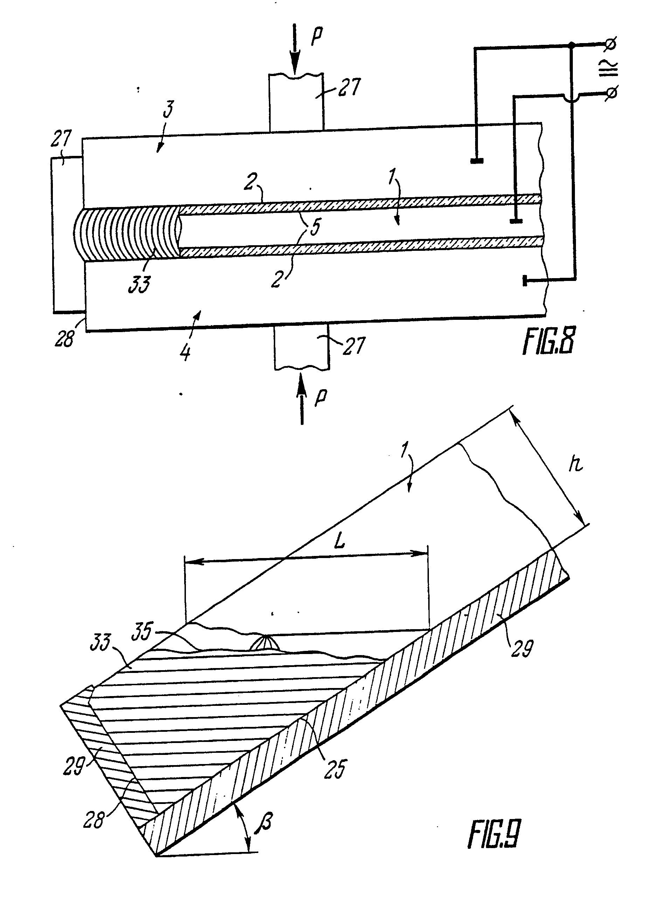

In order to improve the quality of joints in welding extended metal parts 3 and 4 (Figs 8, 9) having a great thickness, the metal parts 3, 4 and the consumable electrode 1 are placed so that the lower end surface 25 of the consumable electrode 1 and the lower surface 26 of the metal parts 3, 4 are set at an angle $\beta$ relative to the horizontal plane in the direction parallel to the welded surfaces 2 of the metal parts 3 and 4, said angle being in the range from 0 to 90°. As the consumable electrode 1 is melted, the welding arc moves repeatedly along the lower end surface 25 of the consumable electrode 1 in a horizonral direction. The distance L covered by the welding arc along the lower end surface 25 of the consumable electrode 1 in a horizontal direction is equal to the length of a horizontal line extending through the lateral surface 5 of the consumable electrode 1 and depends on the metal parts 3, 4 and on the value of the angle $\beta$.

The angle $\beta$ between the lower end surface 26 of the metal parts 3, 4 and the horizontal plane is determined from the formula

$$\beta = \text{arc sin } \frac{h}{L_1} \, ,$$

where

h -     thickness of metal parts 3 and 4, mm;

$L_1$ -     optimal distance covered by welding arc along lower end surface 25 of consumable electrode 1 in horizontal direction, mm.

The optimal distance $L_1$ is set to obtain quality structure of a weld with due account taken of the occurring metallurgical and crystallization processes in welding of the metal parts 3 and 4. The optimal distance $L_1$ ensures the cooling time of the molten metal of the weldpool necessary to obtain quality structure of a weld.

For example, for the consumable electrode 1 made of steel the above time is the period required to decrease the temperature of the weldpool 31 (Fig. 8) from 800 to 500 °C (structural transformation interval).

The cooling time of the weldpool 31 influencing the mechanical properties of a weld depends on much parameters as arcing voltage, welding current, welding speed and thickness of metal articles. The distance $L_1$ can be suitably changed to obtain quality structure of a weld with lesser power consumption.

Examples illustraring use of the proposed method of electric arc welding of metal parts

Example 1

The operation involved electric arc welding of two rectangular steel plates with flat lateral surfaces measuring 80x50x10 mm.

A consumable steel electrode measuring 80x40x1.8 mm and having on its lateral surfaces an insulating layer (a mixture of chalk and water glass) 0.8 to 1 mm in thickness was placed between the plates to be welded with a gap approximately equalling the thickness of the insulating layer.

Operating parameters:
welding current I = 340 - 350 A;

arcing voltage U = 15 - 20 V.

The metal of the plates, the consumable electrode, the weld and the intermediate zone had a pearlitic-ferritic structure with a grain size of 3 to 4$\mu$.

Example 2

The operation involved electric arc welding of metal parts made of low-carbon steel. A consumable electrode was made up of metallic elements made of the same material as said metal parts and having therebetween a reinforcing plate made of alloyed steel. A metallographic analysis showed that the obtained weld was characterized by high mechanical properties both in the central and peripheral portions.

The use of the present invention permits increasing the efficiency in electric arc welding of thick-walled metal parts, large-diameter pipes anf intricately shaped metal parts, carrying out arc welding in hard-to-get-at places and improving quality of welds. High skill is not essential on the part of a welding operator when using the proposed method for arc welding of metal parts.

Industrial Applicability

The present invention can be advantageously used in machine building, shipbuilding and power-plant engineering.

**Claims**

1.  A method of electric arc welding of metal parts, comprising the steps of placing a consumable electrode (1) in the welding zone of metal parts (3, 4, 7) connected together with the consumable electrode (1) to a power source with gaps (23) between lateral and lower end surfaces (5, 25) of the consumable electrode (1) and welded surfaces (2) of the metal parts (3, 4, 7), firing a welding arc in a gap (24) between the lower end surface (25) of the consumable electrode (1) and the welded surfaces (2) of the metal parts (3, 4, 7), forming a metal jumper between the welded surfaces (2) of the metal parts (3, 4, 7) and welding together the metal parts (3, 4, 7), **characterized** in that the consumable electrode (1) is disposed between the welded surfaces (2) of at least two metal parts (3, 4, 7) with the gaps (23) between the lateral surfaces (5) of the consumable electrode (1) and the welded surfaces (2) of the metal parts (3, 4, 7)

and the gap (24) between the lower end surface (25) of the consumable electrode (1) and a lower surface (26) of at least one of the metal parts (3, 4, 7), and an insulating layer is placed in the gap (23) between the lateral surfaces (5) of the consumable electrode (1) and the welded surfaces (2) of the metal parts (3, 4, 7), the selected consumable electrode (1) having the lateral surfaces (5) whose cross-sectional area and configuration are essentially similar to the cross-sectional area and configuration of at least one of the welded surfaces (2) of the metal parts (3, 4, 7).

2.  A method as claimed in Claim 1, **characterized** in that the metal parts (3, 4, 7) and the consumable electrode (1) are installed so that the lower surface (26) of at least one of the metal parts (3, 4, 7) is set at an angle greater than 0° relative to a horizontal plane in the direction perpendicular to the welded surfaces (2) of the metal parts (3, 4, 7) while tangential planes passing through any points on the lateral surfaces (5) of the consumable electrode (1) and the welded surfaces (2) of the metal parts (3, 4, 7) are disposed at an angle greater than 0° relative to a horizontal plane.

3.  A method as claimed in Claims 1 and 2, **characterized** in that the metal parts (3, 4) and the consumable electrode (1) are positioned so that the lower surface (26) of at least one of the metal parts (3, 4) is arranged at an angle of 0 to 90° relative to a horizontal plane in the direction parallel to the welded surfaces (2) of the metal parts (3, 4).

4.  A consumable electrode for carrying out the proposed method of electric arc welding of metal parts, representing an extended structure, **characterized** in that it comprises metallic elements (11) located parallel to each other with gaps (12) between lateral surfaces (13), each element being connected to the power source and having a cross-sectional area and configuration of its lateral surface (5, 13) similar to the cross-sectional area and configuration cf the welded surfaces (2) of the metal parts (3, 4, 7), insulating layers being suitably placed in the gaps (12) between the lateral surfaces (13) of the metallic elements (11).

5.  A consumable electrode as claimed in Claim 4, **characterized** in that the gaps (12) between the lateral surfaces (5) of the metallic elements (11) contain at least one reinforcing plate (14) with gaps (16, 17) between the lateral surfaces (13) of the metallic elements (11) and lateral surfaces (15) of each reinforcing layers are disposed in a suitable manner.

6. A consumable electrode as claimed in Claims 4 and 5, **characterized** in that each metallic element (11) is made up of layers (21, 22) disposed in parallel to each other and to the lateral surfaces (5) of the consumable electrode (1) and having a different thermal conductivity factor which decreases in the direction from the central part of the consumable electrode (1) to the lateral surfaces (5) of said consumable electrode (1).

FIG.1

EP 0 418 392 A1

FIG.2

11

FIG.3

FIG.4

FIG.5

FIG.6

FIG.7

FIG.8

FIG.9

# INTERNATIONAL SEARCH REPORT

International Application No   PCT/SU 89/00326

## I. CLASSIFICATION OF SUBJECT MATTER (if several classification symbols apply, indicate all)

According to International Patent Classification (IPC) or to both National Classification and IPC  5

$IPC^5$   B 23 K 9/14

## II. FIELDS SEARCHED

### Minimum Documentation Searched [7]

| Classification System | Classification Symbols |
|---|---|
| IPC [4] | B 23 K 9/14, 9/24, 25/00, 9/00 |

Documentation Searched other than Minimum Documentation
to the Extent that such Documents are included in the Fields Searched [8]

## III. DOCUMENTS CONSIDERED TO BE RELEVANT [9]

| Category* | Citation of Document, [11] with indication, where appropriate, of the relevant passages [12] | Relevant to Claim No. [13] |
|---|---|---|
| Y | GB,B,1291654 (LA SOUDURE ELECTRIQUE AUTOGENE, PROCEDES ARCOS, SA), 4 October 1972 (04.10.72) fig. 1-2 | 1,2,3,4 |
| Y | GB,B,1521743 (BRITISH STEEL CORPORATION), 16 August 1978 (16.08.78), fig. 1-2 | 1 |
| Y | GB,B,1502606 (BRITISH STEEL CORPORATION), 1 March 1978 (01.03.78), fig. 1-3 | 1-2 |
| Y | SU,AI, 261613 (Institut elektrosvarki im. E.O. Patona) 22 May 1970 (22.05.70), fig. 1-2 | 4-6 |
| Y | SU,AI, 189971 (Institut ēlektrosvārki im. E.O. Patona), 31 January 1967 (31.01.67) | 6 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 6 March 1990 (06.03.90) | 2 April 1990 (02.04.90) |

| International Searching Authority | Signature of Authorized Officer |
|---|---|
| ISA/SU | |

Form PCT/ISA/210 (second sheet) (January 1985)